# EUROPEAN PATENT APPLICATION

(11) **EP 4 438 270 A1**
(43) Date of publication of application: **02.10.2024**
(21) Application number: 23761741.0
(22) Date of filing: 17.07.2023
(51) Int. Cl.: B29C 64/129

(54) **SUNKEN TYPE 3D PRINTER AND 3D PRINTING METHOD**

(30) Priority: 13.02.2023 CN 202310106483
(71) Applicant: Aidite (Qinhuangdao) Technology Co., Ltd., Qinhuangdao Hebei 066004 (CN)
(72) Inventor: XING, Youdao, Qinhuangdao, Hebei 066000 (CN); MENG, Xianbin, Qinhuangdao, Hebei 066000 (CN); WANG, Zhen, Qinhuangdao, Hebei 066000 (CN); YIN, Bin, Qinhuangdao, Hebei 066000 (CN); LI, Hongwen, Qinhuangdao, Hebei 066000 (CN)
(74) Representative: Plougmann Vingtoft a/s
(86) International application number: PCT/CN2023/107703
(87) International publication number: WO 2024/169124

(57) **Abstract**

Provided are a 3D printer and a 3D printing method. According to the top-down 3D printer, an output end of a first drive mechanism is connected to a printing platform, the first drive mechanism is configured to drive the printing platform to move up and down in a height direction of a workbench, an output shaft of a second drive mechanism is connected to a scraper, the second drive mechanism is configured to drive the scraper to move up and down in the height direction of the workbench and drive the scraper to rotate around the output shaft of the second drive mechanism, the output shaft of the second drive mechanism is parallel to the height direction of the workbench, a laser displacement sensor is configured to monitor a liquid level of resin in a resin vat, and a liquid level adjustment mechanism is configured to feed resin to or extract resin from the resin vat. A light device, the second drive mechanism, the scraper, the printing platform, the resin vat and the liquid level adjustment mechanism are disposed at intervals from top to bottom in the height direction of the workbench.

## Description

The present application claims priority to Chinese Patent Application No. 202310106483.2 filed with the China National Intellectual Property Administration (CNIPA) on Feb. 13, 2023, the disclosure of which is incorporated herein by reference in its entirety.

### TECHNICAL FIELD

The present application relates to the technical field of three-dimensional (3D) printing, for example, a top-down 3D printer and a 3D printing method.

### BACKGROUND

A three-dimensional (3D) printer combines computer-aided design with material processing and molding technologies. By utilizing a control system and programming software, the 3D printer lays down various materials layer by layer to form a solid product. This solid product is generated through a bottom-to-top laying process on a printing platform in accordance with the projection of a light device. In the related art, stereolithography apparatus (SLA) 3D printers are mainly divided into two types, that is, bottom-up 3D printers and top-down 3D printers, depending on the placement of the light device.

When the top-down 3D printer in the related art performs 3D printing, the printing platform moves down, causing resin in a resin vat to adhere to the surface of the printing platform. Then, the printing platform moves up to a designated position. Subsequently, a laser rangefinder on a scraper detects the liquid level of resin, and the scraper and the light device are adjusted to the designated positions. When the liquid level of the resin changes, the scraper and the light device are adjusted to move according to the detection data from the laser rangefinder on the scraper. It is to be understood that the material scraping operation of the scraper and the exposure operation are always based on the liquid level of the resin. However, this top-down 3D printer presents the following drawbacks when performing 3D printing.
1) The laser rangefinder is disposed on the movable/rotatable scraper. The installation precision of the scraper and the vibration generated by movement the scraper can affect the detection accuracy of the laser rangefinder. Furthermore, the laser rangefinder limits the rotation speed of the scraper.
2) The light device's relatively large volume and weight mean that ascending and descending process of the light device can limit the printing speed of the top-down 3D printer.
3) Both the laser rangefinder and the light device are electrical components and require wiring. Consequently, positioning the laser rangefinder on the movable/rotatable scraper increases the difficulty of wiring. Additionally, the ascending and descending movements of the light device also increase wiring complexity.
4) The sequential adjustment of the scraper and light device's movements limits the printing speed of the top-down 3D printer. Moreover, repeatedly moving the scraper and light device necessitates multiple repositionings, and any errors during these repositionings can affect the printing precision.

### SUMMARY

The present application provides a top-down three-dimensional (3D) printer and a 3D printing method to improve the surface quality of a printed and molded model and improve the printing speed.

The present application uses a top-down 3D printer which includes a workbench, a light device, a first drive mechanism, a second drive mechanism, a scraper, a printing platform, a resin vat, a laser displacement sensor and a liquid level adjustment mechanism. The light device, the first drive mechanism, the second drive mechanism, the scraper, the printing platform, the resin vat, the laser displacement sensor and the liquid level adjustment mechanism are disposed on the workbench.

An output end of the first drive mechanism is connected to the printing platform, the first drive mechanism is configured to be capable of driving the printing platform to move up and down in a height direction of the workbench, an output shaft of the second drive mechanism is connected to the scraper, the second drive mechanism is configured to be capable of driving the scraper to move up and down in the height direction of the workbench and capable of driving the scraper to rotate around the output shaft of the second drive mechanism, the output shaft of the second drive mechanism is parallel to the height direction of the workbench, the laser displacement sensor is configured to monitor a liquid level of resin in the resin vat, and the liquid level adjustment mechanism is capable of feeding resin to or extracting resin from the resin vat.

The light device, the second drive mechanism, the scraper, the printing platform, the resin vat and the liquid level adjustment mechanism are disposed at intervals from top to bottom in the height direction of the workbench.

The present application uses a 3D printing method which is used for controlling the preceding top-down 3D printer. The 3D printing method includes steps described below.

A printing platform is controlled to acquire resin from a resin vat.

A scraper is controlled to rotate by a preset angle in a first rotation direction from a first initial position to flatten resin on the printing platform so that a thickness of the resin on the printing platform is a preset layer thickness.

The scraper is controlled to move up by a first preset distance.

The top-down 3D printer is allowed to stand for a preset standing duration.

A light device is controlled to expose a printed picture.

A liquid level of resin in the resin vat is acquired.

Whether the liquid level of the resin in the resin vat is within a preset liquid level range is determined.

In response to determining that the liquid level of the resin in the resin vat is within the preset liquid level range, controlling the scraper to return to the first initial position and controlling the printing platform to acquire resin again from the resin vat are simultaneously performed.

In response to determining that the liquid level of the resin in the resin vat is not within the preset liquid level range, controlling the scraper to return to the first initial position, controlling a liquid level adjustment mechanism to adjust the liquid level of the resin vat to be within the preset liquid level range and controlling the printing platform to acquire resin again from the resin vat are simultaneously performed.

### BRIEF DESCRIPTION OF DRAWINGS

FIG. 1 is a structural view of a top-down 3D printer from a first perspective according to a specific embodiment of the present application;
FIG. 2 is a structural view of a top-down 3D printer from a second perspective according to a specific embodiment of the present application;
FIG. 3 is a partial structural view of a top-down 3D printer according to a specific embodiment of the present application;
FIG. 4 is a flowchart of a 3D printing method according to a specific embodiment of the present application;
FIG. 5 is a diagram showing the principle of a 3D printing method according to a specific embodiment of the present application;
FIG. 6 is a structural view of a top-down 3D printer from a first perspective according to a specific embodiment of the present application; and
FIG. 7 is a structural view of a top-down 3D printer from a second perspective according to a specific embodiment of the present application.

### Reference list

- 1: workbench
- 11: first workbench
- 12: second workbench
- 13: third workbench
- 2: light device
- 3: first drive mechanism
- 31: first motor
- 32: first lead screw and nut assembly
- 33: connector
- 321: first lead screw
- 322: first screw nut
- 4: second drive mechanism
- 41: second motor
- 42: third motor
- 43: belt drive mechanism
- 5: scraper
- 6: printing platform
- 7: resin vat
- 8: laser displacement sensor
- 9: liquid level adjustment mechanism
- 91: hydraulic pump
- 92: reservoir
- 10: controller

### DETAILED DESCRIPTION

Hereinafter the present application will be described in detail in conjunction with the drawings and embodiments. It is to be understood that the embodiments described herein are intended to illustrate the present application. Additionally, it is to be noted that for ease of description, only part, not all, of structures related to the present application are illustrated in the drawings.

In the description of the present application, unless otherwise expressly specified, the term "connected to each other", "connected" or "secured" is to be construed in a broad sense, for example, as securely connected, detachably connected or integrated; mechanically connected or electrically connected; directly connected to each other or indirectly connected to each other via an intermediary; or internally connected between two elements or interaction relations between two elements. For those of ordinary skill in the art, specific meanings of the preceding terms in the present application may be construed according to specific circumstances.

In the present application, unless otherwise expressly specified, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature, or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In the description of this embodiment, the orientation or position relationships indicated by terms "above", "below", "right" and the like are based on the orientation or position relationships shown in the drawings, merely for ease of description and simplifying an operation, and these relationships do not indicate or imply that the referred device or element has a specific orientation or is constructed and operated in a specific orientation. In addition, the terms "first" and "second" are used only for distinguishing between descriptions and have no special meaning.

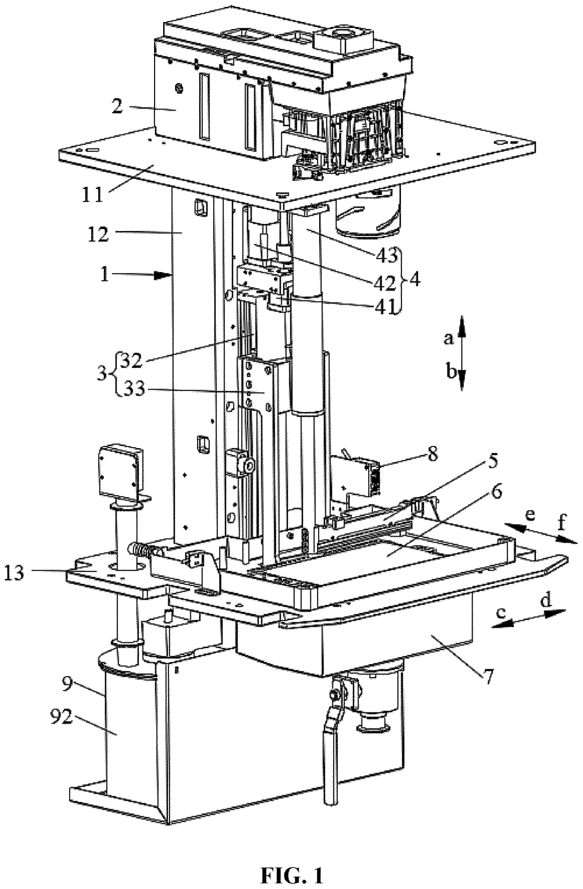

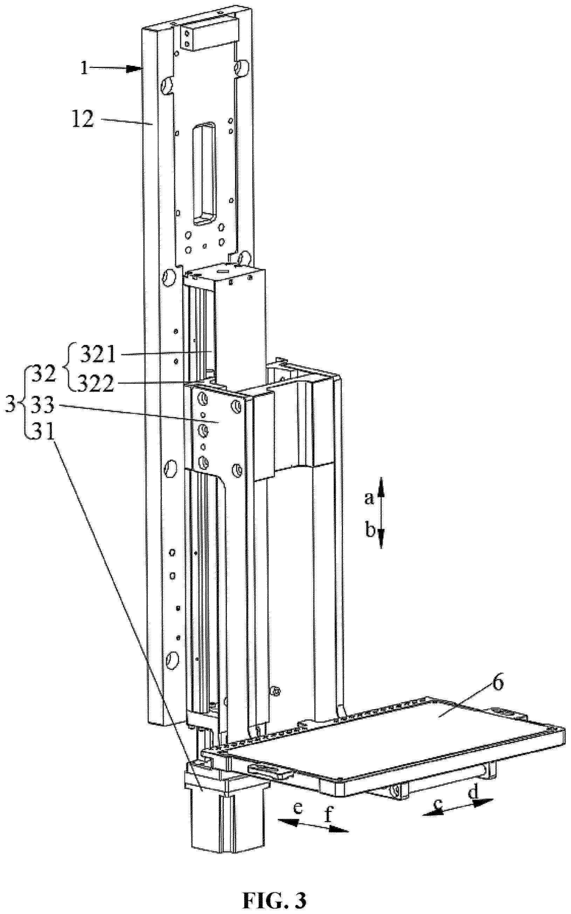

The present application provides a top-down three-dimensional (3D) printer. As shown in FIGS. 1 to 3, the top-down 3D printer includes a workbench 1, a light device 2, a first drive mechanism 3, a second drive mechanism 4, a scraper 5, a printing platform 6, a resin vat 7, a laser displacement sensor 8 and a liquid level adjustment mechanism 9. The light device 2, the first drive mechanism 3, the second drive mechanism 4, the scraper 5, the printing platform 6, the resin vat 7, the laser displacement sensor 8 and the liquid level adjustment mechanism 9 are disposed on the workbench 1. An output end of the first drive mechanism 3 is connected to the printing platform 6, the first drive mechanism 3 is capable of driving the printing platform 6 to move up and down in a height direction of the workbench 1, an output shaft of the second drive mechanism 4 is connected to the scraper 5, the second drive mechanism 4 is capable of driving the scraper 5 to move up and down in the height direction of the workbench 1 and capable of driving the scraper 5 to rotate around the output shaft of the second drive mechanism 4, the output shaft of the second drive mechanism 4 is parallel to the height direction of the workbench 1, the laser displacement sensor 8 is configured to monitor a liquid level of resin in the resin vat 7, and the liquid level adjustment mechanism 9 is capable of feeding resin to or extracting resin from the resin vat 7. The light device 2, the second drive mechanism 4, the scraper 5, the printing platform 6, the resin vat 7 and the liquid level adjustment mechanism 9 are disposed at intervals from top to bottom in the height direction of the workbench 1.

As shown in FIGS. 1 to 3, when the top-down 3D printer performs 3D printing, the first drive mechanism 3 drives the printing platform 6 to move down in the height direction of the workbench 1 to be immersed in the resin vat 7, and then drives the printing platform 6 to move up in the height direction of the workbench 1; at this moment, the printing platform 6 remains in the resin in the resin vat 7. It is to be understood that throughout theprinting process, the printing platform 6 remains in the resin in the resin vat 7. The second drive mechanism 4 drives the scraper 5 to rotate to flatten resin on the printing platform 6 so that the thickness of the resin on the printing platform 6 is a preset layer thickness. The second drive mechanism 4 drives the scraper 5 to move up to be away from the printing platform 6. After the top-down 3D printer stands for a preset standing duration, the light device 2 exposes a printed picture, and the scraper 5 returns to an initial position. In this manner, one time of 3D printing operation is completed, and the preceding process is repeated until 3D printing is completed. The light device 2 is disposed securely on the top end of the workbench 1, and the laser displacement sensor 8 is disposed securely on the workbench 1 and is located above the resin vat 7. It is to be understood that in the 3D printing process, positions of the light device 2 and the laser displacement sensor 8 remain unchanged, and only the operating position of the printing platform 6 needs to be adjusted; during each time of printing operation, the scraper 5 remains at the same height position to rotate and flatten the newly added resin on the upper molding surface of the model on the printing platform 6, so that the problem in the related art that the printing speed and precision are affected by the movement of the light device 2 and the laser displacement sensor 8 is effectively avoided. It is to be understood that when the light device 2 performs exposure and printing on the resin on the upper molding surface of the model on the printing platform 6, the resin is at a static and constant liquid level, so that the surface quality of the printed and molded model can be effectively improved, and horizontal grains on the surface of the model are avoided; therefore, the problem in the related art that the printing precision is affected by the movement of the light device 2 and the laser displacement sensor is effectively avoided, the problem in the related art that the printing speed is affected by the large volume and weight of the light device 2 is avoided, and the difficulty of wiring of the light device 2 and the laser displacement sensor 8 is reduced. Moreover, the first drive mechanism 3 is capable of driving the printing platform 6 to move up and down in the height direction of the workbench 1, the second drive mechanism 4 is capable of driving the scraper 5 to move up and down in the height direction of the workbench 3 and capable of driving the scraper 5 to rotate around the output shaft of the second drive mechanism 4; it is to be understood that the process where the first drive mechanism 3 drives the printing platform 6 to acquire resin from the resin vat 7 in the height direction of the workbench 1 and the process that the second drive mechanism 4 drives the scraper 5 to rotate around the output shaft of the second drive mechanism 4 and adjusts the scraper 5 to the operating position in the height direction of the workbench 1 may be simultaneously performed, so that the printing speed is further improved.

Direction ab in FIGS. 1 to 3 is the height direction of the workbench 1; Direction cd in FIGS. 1 to 3 is a length direction of the workbench 1 and is parallel to a length direction of the printing platform 6; Direction ef in FIGS. 1 to 3 is a width direction of the workbench 1 and is parallel to a width direction of the printing platform 6.

Optionally, as shown in FIGS. 1 to 3, the workbench 1 includes a first workbench 11, a second workbench 12 and a third workbench 13. Two ends of the second workbench 12 are connected to the first workbench 11 and the third workbench 13, respectively. The light device 2 is disposed on the first workbench 11, and the first drive mechanism 3 and the second drive mechanism 4 are both disposed on the second workbench 12. The resin vat 7, the laser displacement sensor 8 and the liquid level adjustment mechanism 9 are all disposed on the third workbench 13.

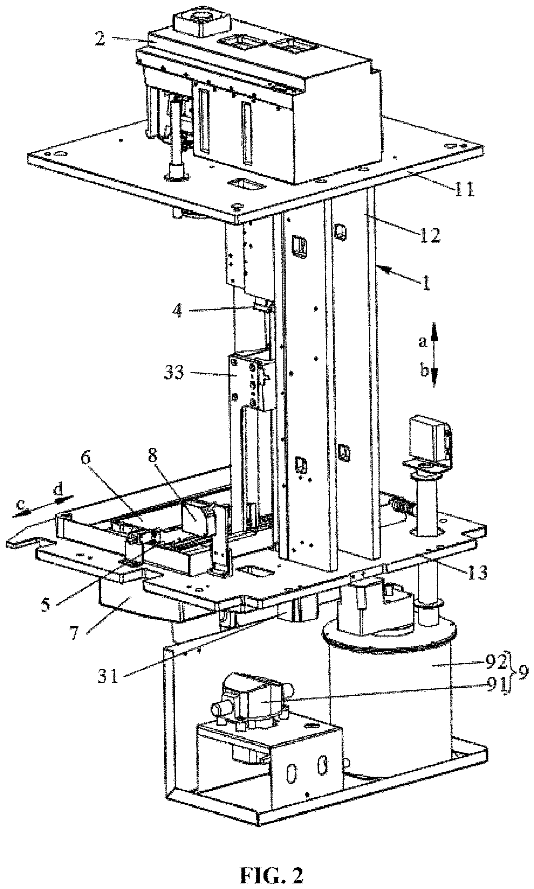

Optionally, as shown in FIG. 1 and FIG. 2, the first workbench 11 and the third workbench 13 are distributed opposite to each other, and the first workbench 11 and the third workbench 13 are both vertical to the second workbench 12. In this setting, in the height direction of the workbench 1, the light device 2 faces the printing platform 6 to ensure that the light device 2 can accurately expose a printed picture and generating a molded model on the printing platform 6.

As shown in FIGS. 1 to 3, the first drive mechanism 3 includes a first motor 31, a first lead screw and nut assembly 32 and an L-shaped connector 33. The first motor 31 is securely disposed on the workbench 1, the first lead screw and nut assembly 32 includes a first lead screw 321 and a first screw nut 322 threaded on the first lead screw 321, an output shaft of the first motor 31 is securely connected to the first lead screw 321, the first screw nut 322 is slidably disposed on the workbench 1 in the height direction of the workbench 1 and is connected to a first end of the connector 33, and the printing platform 6 is securely disposed on a second end of the connector 33. In the height direction of the workbench 1, the first drive mechanism 3 is located between the liquid level adjustment mechanism 9 and the light device 2. Optionally, the first motor 31 is securely disposed on the second workbench 12 and is located below the third workbench 13, the first lead screw 321 is rotatably disposed on the second workbench 12 through a bearing, and the first screw nut 322 is slidably disposed on the workbench 1 in a height direction of the second workbench 12 and is connected to an end of the connector 33. The first motor 31 drives the first lead screw 321 to rotate around a central axis of the first lead screw 321, driving the first screw nut 322, which is threaded to the first lead screw 321, to move in an axial direction of the first lead screw 321, and thereby driving the connector 33 to move in the axial direction of the first lead screw 321. It is to be understood that the axial direction of the first lead screw 321 is parallel to the height direction of the workbench 1, and the printing platform 6 is securely disposed on the connector 33, so that the printing platform 6 is driven to move up and down in the height direction of the workbench 1, and thus the printing platform 6 can be driven to be immersed in the resin vat 7 or be away from the resin vat 7.

During the 3D printing process, the printing platform 6 remains immersed in the resin in the resin vat 7; after the 3D printing process is completed, the first motor 31 drives the printing platform 6 away from the resin vat 7.

As shown in FIG. 1 and FIG. 2, the second drive mechanism 4 includes a lift mechanism and a rotation mechanism. The lift mechanism includes a second motor 41 and a second lead screw and nut assembly. The rotation mechanism includes a third motor 42 and a belt drive mechanism 43. The second lead screw and nut assembly includes a second lead screw and a second screw nut which are in threaded cooperation. An output shaft of the second motor 41 is securely connected to the second lead screw, and the second screw nut is slidably disposed on the workbench 1 in the height direction of the workbench 1 and is connected to a housing of the third motor 42. An output shaft of the third motor 42 is securely connected to an input shaft of the belt drive mechanism 43, and an output shaft of the belt drive mechanism 43 is drivingly connected to the scraper 5. Optionally, the second motor 41 is securely disposed on the second workbench 12, the output shaft of the second motor 41 is securely connected to the second lead screw, the second lead screw is rotatably disposed on the second workbench 12 through a bearing, and the second screw nut is slidably disposed on the second workbench 12 in the height direction of the workbench 1 and is connected to the housing of the third motor 42. In this setting, the second motor 41 drives the third motor 42 and the belt drive mechanism 43 of the rotation mechanism to synchronously move up and down, thereby driving the scraper 5 to move up and down; moreover, the third motor 42 drives the scraper 5 to rotate, so that the moving up and down, and the rotation of the scraper 5 driven by the second drive mechanism 4 are achieved. It is to be understood that ascending or descending, and the rotation of the scraper 5 can be simultaneously achieved, so that the printing speed of the top-down 3D printer is further improved.

As shown in FIG. 1 and FIG. 2, the liquid level adjustment mechanism 9 includes a hydraulic pump 91 and a reservoir 92. Two ends of the hydraulic pump 91 are connected to the reservoir 92 and the resin vat 7, respectively. Optionally, the hydraulic pump 91 and the reservoir 92 are both disposed on the third workbench 13. It is to be understood that the reservoir 92 stores resin, which enables resin to be fed to or extracted from the resin vat 7 through the liquid level adjustment mechanism 9. The hydraulic pump 91 may be one of a gear pump, a diaphragm pump, a plunger pump and a peristaltic pump. Optionally, in the embodiment, the hydraulic pump 91 may be, optionally, a peristaltic pump.

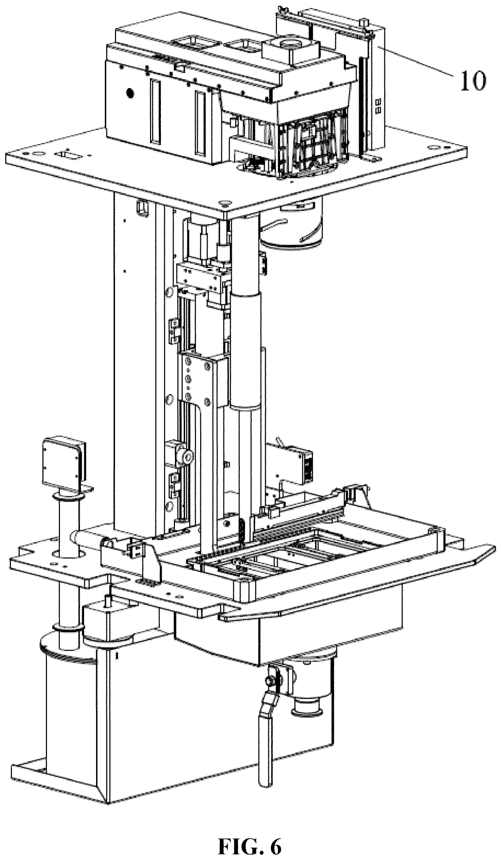

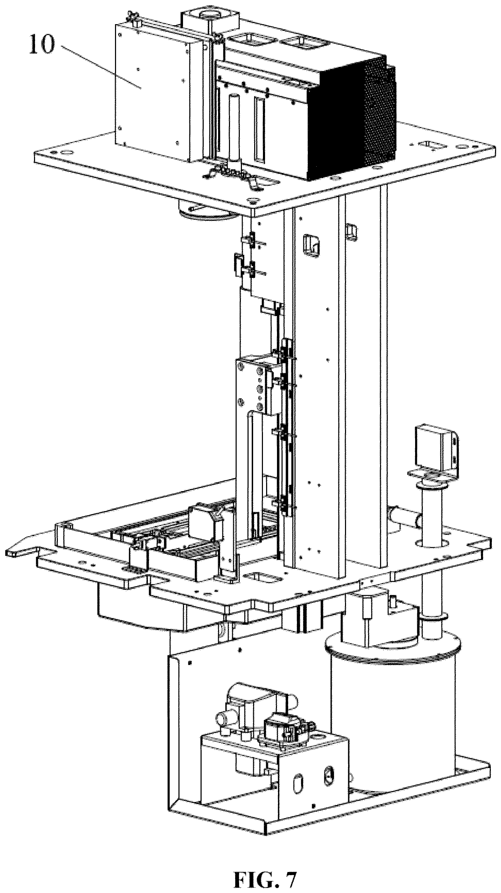

As shown in FIGS. 6 and 7, in an embodiment, the top-down 3D printer further includes a controller 10 disposed on the workbench 1. The controller 10 is electrically connected to the light device 2, the first drive mechanism 3, the second drive mechanism 4, the laser displacement sensor 8 and the liquid level adjustment mechanism 9. Optionally, the controller 10 can control the light device 2, the first motor 31 of the first drive mechanism 3 and the second motor 41 and the third motor 42 of the second drive mechanism 4 to operate, and can control the hydraulic pump 91 of the liquid level adjustment mechanism 9 to operate according to electrical signals of the laser displacement sensor 8.

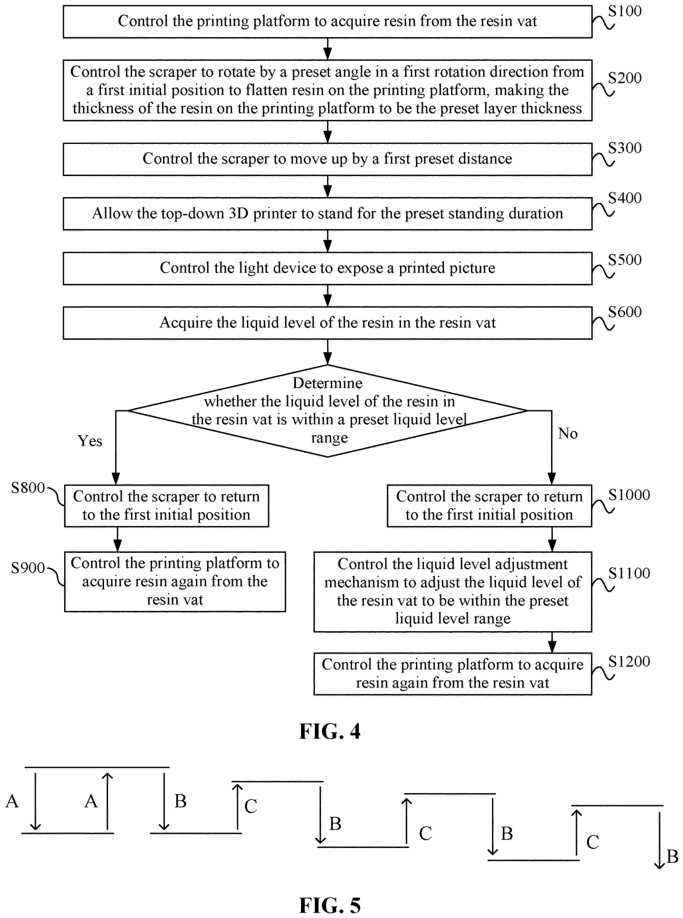

The present application further provides a 3D printing method. The 3D printing method is used for controlling the preceding top-down 3D printer. As shown in FIG. 4 and FIG. 5, the 3D printing method includes steps described below.

In S100, the printing platform 6 is controlled to acquire resin from the resin vat 7.

The step in which the printing platform 6 is controlled to acquire resin from the resin vat 7 includes S110 and S120.

In S110, the printing platform 6 is controlled to move down from a second initial position by a second preset distance to be immersed in the resin vat 7.

The second preset distance is an empirical value obtained from a large number of previous experiments.

In S120, after the printing platform 6 is immersed in the resin vat 7 for first preset duration, the printing platform 6 is controlled to move up by the second preset distance to reach the second initial position, and the printing platform 6 is still immersed in the resin in the resin vat 7.

A in FIG. 5 represents the second preset distance, B represents a third preset distance, and C represents a fourth preset distance. A and B may be the same or different. C equals B minus the preset layer thickness.

In S200, the scraper 5 is controlled to rotate by a preset angle in a first rotation direction from a first initial position to flatten resin on the printing platform 6 so that the thickness of the resin on the printing platform 6 is the preset layer thickness.

It is to be understood that in the height direction of workbench 1, the first initial position is higher than the second initial position, and in the height direction of workbench 1, the distance between the first initial position and the second initial position is equal to the preset layer thickness.

Optionally, the output shaft of the second drive mechanism 4 is located at a middle position of the printing platform 6 in the length direction of the printing platform 6 and on a side of the printing platform 6 in the width direction of the printing platform 6. The preset angle is greater than or equal to 135 degrees. It is to be understood that the output shaft of the belt drive mechanism 43 is located at the middle position in the length direction of the printing platform 6 and on the side in the width direction of the printing platform 6. After the scraper 5 rotates around the output shaft of the belt drive mechanism 43 by the preset angle from the first initial position, the resin on the printing platform 6 is flattened and the thickness of the resin on the printing platform 6 is the preset layer thickness. Optionally, in the embodiment, exemplarily, an example is illustrated where when the scraper 5 is located at the first initial position, the scraper 5 is parallel to the length direction of the printing platform 6, and the preset angle is equal to 180 degrees.

In S300, the scraper 5 is controlled to move up by a first preset distance.

This setting allows the scraper 5 to quickly rotate in a second rotation direction without touching the resin during rotation, reducing the risk of fluctuations of the liquid level of the resin.

At this time, the printing platform 6 is still located in the resin in the resin vat 7. It is to be understood that in the whole printing process, the printing platform 6 remains in the resin in the resin vat 7.

In S400, the top-down 3D printer is allowed to stand for the preset standing duration. The preset standing duration is an empirical value obtained from a large number of previous experiments. This setting is to ensure that the liquid level of the resin does not fluctuate and thus to improve the printing quality of 3D printing.

In S500, the light device 2 is controlled to expose a printed picture;

In S600, the liquid level of the resin in the resin vat 7 is acquired.

In S700, whether the liquid level of the resin in the resin vat 7 is within a preset liquid level range is determined.

In response to determining that the liquid level of the resin in the resin vat 7 is within the preset liquid level range, S800 and S900 are simultaneously performed.

In S800, the scraper 5 is controlled to return to the first initial position.

The step in which the scraper 5 is controlled to return to the first initial position includes S810 and S820.

In S810, the scraper 5 is controlled to rotate by the preset angle in the second rotation direction, where the second rotation direction and the first rotation direction are opposite rotation directions.

In S820, the scraper 5 is controlled to move down by the first preset distance.

In S900, the printing platform 6 is controlled to acquire resin again from the resin vat 7. In this manner, the upper surface of the molded model on the printing platform 6 can obtain resin.

Optionally, the step in which the printing platform 6 is controlled to acquire resin again from the resin vat 7 includes S910 and S920.

In S910, the printing platform 6 is controlled to move down from the second initial position by the third preset distance to be immersed in the resin vat 7.

In S920, after the printing platform 6 is immersed in the resin vat 7 for the first preset duration, the printing platform 6 is controlled to move up by the fourth preset distance, where the fourth preset distance equals the third preset distance minus the preset layer thickness.

It is to be understood that during 3D printing, when the first layer is printed, the printing platform 6 moves by the second preset distance and moves up by the second preset distance; then during each subsequent layer of printing, the printing platform 6 moves by the third preset distance and moves up by a distance which satisfies that the distance equals the third preset distance minus the preset layer thickness to ensure that the printed thickness of each time of printing is the preset layer thickness. It is to be understood that in response to determining that the liquid level of the resin in the resin vat 7 is within the preset liquid level range, S800 and S900 are simultaneously performed, so that the printing speed of the top-down 3D printer is improved.

In response to determining that the liquid level of the resin in the resin vat 7 is not within the preset liquid level range, S1000, S 1100 and S1200 are simultaneously performed.

In S1000, the scraper 5 is controlled to return to the first initial position.

Optionally, the step in which the scraper 5 is controlled to return to the first initial position includes S1010 and S1020.

In S1010, the scraper 5 is controlled to rotate by the preset angle in the second rotation direction, where the second rotation direction and the first rotation direction are opposite rotation directions.

In S1020, the scraper 5 is controlled to move down by the first preset distance.

In S 1100, the liquid level adjustment mechanism 9 is controlled to adjust the liquid level of the resin vat 7 to be within the preset liquid level range.

In response to determining that the liquid level of the resin in the resin vat 7 is greater than a maximum value of the preset liquid level range, the liquid level adjustment mechanism 9 is controlled to extract the resin in the resin vat 7 until the liquid level of the resin in the resin vat 7 is within the preset liquid level range. Optionally, the controller 10 controls the hydraulic pump 91 to operate, that is, to extract the resin in the resin vat 7.

In response to determining that the liquid level of the resin in the resin vat 7 is less than a minimum value of the preset liquid level range, the liquid level adjustment mechanism 9 is controlled to feed resin to the resin vat 7 until the liquid level of the resin in the resin vat 7 is within the preset liquid level range. Optionally, the controller 10 controls the hydraulic pump 91 to operate, that is, to feed resin to the resin vat 7.

In S1200, the printing platform 6 is controlled to acquire resin again from the resin vat 7.

Optionally, the step in which the printing platform 6 is controlled to acquire resin again from the resin vat 7 includes S1210 and S1220.

In S1210, the printing platform 6 is controlled to move down by the third preset distance to be immersed in the resin vat 7.

In S 1220, after the printing platform 6 is immersed in the resin vat 7 for the first preset duration, the printing platform 6 is controlled to move up by the fourth preset distance, where the fourth preset distance equals the third preset distance minus the preset layer thickness.

It is to be understood that during 3D printing, when the first layer is printed, the printing platform 6 moves down by the second preset distance and moves up by the second preset distance; then during each subsequent layer of printing, the printing platform 6 moves down by the third preset distance and moves up by a distance which satisfies that the distance equals the third preset distance minus the preset layer thickness to ensure that the printed thickness of each time of printing is the preset layer thickness. It is to be understood that in response to determining that the liquid level of the resin in the resin vat 7 is not within the preset liquid level range, S 1000, S 1100 and S 1200 are simultaneously performed, so that the printing speed of the top-down 3D printer is improved.

It is to be understood that after S920 is completed or after S1220 is completed, S200 to S700 are repeatedly performed. In response to determining that the liquid level of the resin in the resin vat 7 is within the preset liquid level range, S800 and S900 are simultaneously performed; in response to determining that the liquid level of the resin in the resin vat 7 is not within the preset liquid level range, S1000, S 1100 and S 1200 are simultaneously performed.

In this manner, the preceding top-down 3D printer is controlled by the 3D printing method to perform 3D printing, so that the problem in the related art that the printing speed and precision are affected by the movement of the light device 2 and the laser displacement sensor 8 is effectively avoided, and thus the printing speed and precision of the top-down 3D printer are improved.

## Claims

1. A top-down 3D printer, comprising a workbench (1), a light device (2), a first drive mechanism (3), a second drive mechanism (4), a scraper (5), a printing platform (6), a resin vat (7), a laser displacement sensor (8) and a liquid level adjustment mechanism (9), wherein the light device (2), the first drive mechanism (3), the second drive mechanism (4), the scraper (5), the printing platform (6), the resin vat (7), the laser displacement sensor (8) and the liquid level adjustment mechanism (9) are disposed on the workbench (1);
wherein an output end of the first drive mechanism (3) is connected to the printing platform (6), the first drive mechanism (3) is configured to drive the printing platform (6) to move up and down in a height direction of the workbench (1), an output shaft of the second drive mechanism (4) is connected to the scraper (5), the second drive mechanism (4) is configured to drive the scraper (5) to move up and down in the height direction of the workbench (1) and drive the scraper (5) to rotate around the output shaft of the second drive mechanism (4), the output shaft of the second drive mechanism (4) is parallel to the height direction of the workbench (1), the laser displacement sensor (8) is configured to monitor a liquid level of resin in the resin vat (7), and the liquid level adjustment mechanism (9) is capable of feeding resin to or extracting resin from the resin vat (7); and
the light device (2), the second drive mechanism (4), the scraper (5), the printing platform (6), the resin vat (7) and the liquid level adjustment mechanism (9) are arranged at intervals from top to bottom in the height direction of the workbench (1).

2. The top-down 3D printer according to claim 1, wherein the first drive mechanism (3) comprises a first motor (31), a first lead screw and nut assembly (32) and an L-shaped connector (33), wherein the first motor (31) is securely disposed on the workbench (1), the first lead screw and nut assembly (32) comprises a first lead screw (321) and a first screw nut (322) threaded on the first lead screw (321), an output shaft of the first motor (31) is securely connected to the first lead screw (321), the first screw nut (322) is slidably disposed on the workbench (1) in the height direction of the workbench (1) and is connected to a first end of the connector (33), and the printing platform (6) is securely disposed on a second end of the connector (33); and
in the height direction of the workbench (1), the first drive mechanism (3) is located between the liquid level adjustment mechanism (9) and the light device (2).

3. The top-down 3D printer according to claim 2, further comprising a controller (10) disposed on the workbench (1), wherein the controller (10) is electrically connected to the light device (2), the first drive mechanism (3), the second drive mechanism (4), the laser displacement sensor (8) and the liquid level adjustment mechanism (9).

4. A 3D printing method, for controlling the top-down 3D printer according to any one of claims 1 to 3, comprising:
controlling a printing platform (6) to acquire resin from a resin vat (7);
controlling a scraper (5) to rotate by a preset angle in a first rotation direction from a first initial position to flatten resin on the printing platform (6), making a thickness of resin on the printing platform (6) to be a preset layer thickness;
controlling the scraper (5) to move up by a first preset distance;
allowing the top-down 3D printer to stand for a preset standing duration;
controlling a light device (2) to expose a printed picture;
acquiring a liquid level of resin in the resin vat (7);
determining whether the liquid level of resin in the resin vat (7) is within a preset liquid level range; and
in response to determining that the liquid level of resin in the resin vat (7) is within the preset liquid level range, simultaneously controlling the scraper (5) to return to the first initial position and controlling the printing platform (6) to acquire resin again from the resin vat (7);
in response to determining that the liquid level of resin in the resin vat (7) is not within the preset liquid level range, simultaneously controlling the scraper (5) to return to the first initial position, controlling the liquid level adjustment mechanism (9) to adjust the liquid level of resin in the resin vat (7) to be within the preset liquid level range and controlling the printing platform (6) to acquire resin again from the resin vat (7).

5. The 3D printing method according to claim 4, wherein controlling the printing platform (6) to acquire resin from the resin vat (7) comprises:
controlling the printing platform (6) to move down from a second initial position by a second preset distance to be immersed in the resin vat (7); and
after the printing platform (6) is immersed in the resin vat (7) for a first preset duration, controlling the printing platform (6) to move up by the second preset distance to reach the second initial position.

6. The 3D printing method according to claim 4, wherein controlling the scraper (5) to return to the first initial position comprises:
controlling the scraper (5) to rotate by the preset angle in a second rotation direction, wherein the second rotation direction and the first rotation direction are opposite rotation directions; and
controlling the scraper (5) to move down by the first preset distance.

7. The 3D printing method according to claim 6, wherein the output shaft of the second drive mechanism (4) is located at a middle position of the printing platform (6) in a length direction of the printing platform (6) and on a side of the printing platform (6) in a width direction of the printing platform (6); and
the preset angle is greater than or equal to 135 degrees.

8. The 3D printing method according to claim 4, wherein controlling the printing platform (6) to acquire the resin again from the resin vat (7) comprises:
controlling the printing platform (6) to move down from a second initial position by a third preset distance to be immersed in the resin vat (7); and
after the printing platform (6) is immersed in the resin vat (7) for first preset duration, controlling the printing platform (6) to move up by a fourth preset distance;
wherein the fourth preset distance equals the third preset distance minus the preset layer thickness.

9. The 3D printing method according to claim 4, wherein in response to determining that the liquid level of resin in the resin vat (7) is not within the preset liquid level range, controlling the liquid level adjustment mechanism (9) to adjust the liquid level of resin in the resin vat (7) to be within the preset liquid level range comprises:
in response to determining that the liquid level of resin in the resin vat (7) is greater than a maximum value of the preset liquid level range, controlling the liquid level adjustment mechanism (9) to extract resin in the resin vat (7) until the liquid level of resin in the resin vat (7) is within the preset liquid level range;
in response to determining that the liquid level of resin in the resin vat (7) is less than a minimum value of the preset liquid level range, controlling the liquid level adjustment mechanism (9) to feed resin to the resin vat (7) until the liquid level of resin in the resin vat (7) is within the preset liquid level range.

10. The 3D printing method according to claim 4, wherein an adjustment duration of controlling the liquid level adjustment mechanism (9) to adjust the liquid level of resin in the resin vat (7) to be within the preset liquid level range is less than a total duration of controlling the printing platform (6) to acquire resin again from the resin vat (7).
